# EUROPÄISCHE PATENTSCHRIFT

(11) **EP 3 171 290 B1**
(45) Veröffentlichungstag und Bekanntmachung des Hinweises auf die Patenterteilung: **11.05.2022**
(21) Anmeldenummer: 16195513.3
(22) Anmeldetag: 25.10.2016
(51) Int. Cl.: G06F 21/75, H04L 9/00

(54) **SCHUTZ EINES COMPUTERSYSTEMS VOR SEITENKANALATTACKEN**
PROTECTION OF A COMPUTER SYSTEM AGAIN SIDE CHANNEL ATTACKS
PROTECTION D'UN SYSTÈME INFORMATIQUE CONTRE LES ATTAQUES PAR CANAL AUXILIAIRE

(30) Priorität: 18.11.2015 AT 509802015
(43) Veröffentlichungstag der Anmeldung: 24.05.2017
(73) Patentinhaber: Siemens AG Österreich, 1210 Wien (AT)
(72) Erfinder: Matschnig, Martin, 3430 Tulln (AT); Cech, Christian, 2483 Ebreichsdorf (AT); Pitu, Ciprian-Leonard, 500371 Brasov (RO)
(74) Vertreter: Maier, Daniel Oliver

(56) Entgegenhaltungen:
- US-A1- 2004 260 932
- US-A1- 2011 138 192
- US-A1- 2012 060 037
- MAURICH INGO VON ET AL: "Towards Side-Channel Resistant Implementations of QC-MDPC McEliece Encryption on Constrained Devices", 1. Oktober 2014 (2014-10-01), NETWORK AND PARALLEL COMPUTING; [LECTURE NOTES IN COMPUTER SCIENCE; LECT.NOTES COMPUTER], SPRINGER INTERNATIONAL PUBLISHING, CHAM, PAGE(S) 266 - 282, XP047300011, ISSN: 0302-9743 ISBN: 978-3-642-16984-7 * Seite 266 - Seite 279 *
- DOMINIK MERLI ET AL: "Protecting PUF Error Correction by Codeword Masking", INTERNATIONAL ASSOCIATION FOR CRYPTOLOGIC RESEARCH,, Bd. 20130603:133048, 30. Mai 2013 (2013-05-30), Seiten 1-16, XP061007760, [gefunden am 2013-05-30]

## Beschreibung

### Technisches Gebiet

Die Erfindung bezieht sich auf ein Verfahren zum Schutz eines Computersystems vor Seitenkanalattacken bei Verwendung eines Ver- oder Entschlüsselungsverfahrens für Datenpakete eines Datenstroms, wobei durch einen Zufallsgenerator Unterbrechungen im Ver- oder Entschlüsselungsverfahren generiert werden. Weiters umfasst die Erfindung ein entsprechendes Computersystem sowie ein entsprechendes Computerprogrammprodukt.

Das erfindungsgemäße Verfahren ist insbesondere dazu geeignet, in sicherheitsrelevanten eingebetteten Systemen (embedded systems) eingesetzt zu werden. Ein eingebettetes System bezeichnet einen elektronischen Rechner oder Computer, der in einen technischen Kontext eingebunden (eingebettet) ist. Dabei übernimmt der Rechner etwa Überwachungs-, Steuerungs- oder Regelfunktionen oder ist für eine Form der Daten- bzw. Signalverarbeitung zuständig. Meist wird dabei eine gemischte Hardware-Software-Implementierung gewählt, welche die große Flexibilität von Software mit der Leistungsfähigkeit der Hardware vereint. Die Software dient dabei sowohl zur Steuerung des eingebetteten Systems selbst als auch gegebenenfalls zur Interaktion des eingebetteten Systems mit der Außenwelt über definierte Schnittstellen oder Protokolle.

### Stand der Technik

Verschlüsselung und Fehlerkorrektur (z.B. mittels Error Correcting Code, ECC) sind zwei zentrale Mechanismen, die in den meisten Kommunikationsprotokollen von Computersystemen zur Anwendung kommen. In der Regel sind diese beiden Operationen voneinander unabhängig und werden sequentiell ausgeführt. D.h. Datenpakete werden erst verschlüsselt und die chiffrierten Daten werden vor der Übertragung noch durch einen fehlerkorrigierenden Code gesichert. Beim Empfang werden in der Regel erst eventuelle Übertragungsfehler korrigiert und die Daten danach entschlüsselt. Allerdings sind auch kombinierte Methoden bekannt, die aber wenig verbreitet sind.

In modernen sicherheitskritischen Anwendungen stellen sogenannte Seitenkanalattacken (SCA, side-channel attacks), bzw. Differential Power Analysis (DPA) Angriffe eine immer größere Gefahr dar. Im Prinzip wird dabei die Leistungsaufnahme eines Computersystems über eine große Anzahl von Zyklen aufgezeichnet, um daraus Rückschlüsse auf den inneren Ablauf zu ziehen. Durch diese Vorgangsweise können z.B. kryptografische Schlüssel gefunden werden. Ob, bzw. wie leicht ein Angreifer mit SCA zum Ziel kommen kann, ist abhängig von der physikalischen Implementierung einer kryptographischen Funktion.

Um dieser Gefahr zu begegnen, steht eine Vielzahl von Härtungsmaßnahmen zur Verfügung. Eine weit verbreitete Methode ist die Einführung von zusätzlicher Logik, die durch einen Zufallsgenerator betrieben wird. Alternativ können auch zufällige Leerzyklen eingefügt werden, wodurch natürlich die Laufzeit verlängert wird. Durch die genannten Maßnahmen wird die Leistungsaufnahme der Schaltung des Computersystems durch zusätzliches Rauschen verschleiert und DPA Analysen werden erschwert. Somit werden zur gesicherten Übertragung von verschlüsselten Inhalten in der Regel sogenannte gehärtete Cryptocores gemeinsam mit Fehlerkorrektur-Logik benötigt. D.h. es wird zusätzliche Hardware, bzw. Chipfläche, oder auch Rechenzeit für die Härtungsmechanismen benötigt.

Bisher werden diese, zum Teil sehr rechenintensiven, Operationen entweder in Software abgebildet oder durch eigene Hardware-Module realisiert. Im ersten Fall wird für die Berechnung Prozessor-Rechenzeit, also CPU-Rechenzeit, benötigt, in beiden Fällen wird zusätzlicher Datentransfer generiert. Die Dokumente "Towards Side-Channel Resistant Implementations of QC-MDPC McEliece Encryption on Constrained Devices", von Ingo von Maurich Tim Güneysu (PQCrypto 2014), und (US 2012/060037 A1) sind relevanter Stand der Technik.

### Darstellung der Erfindung

Es ist eine Aufgabe der vorliegenden Erfindung, ein Verfahren zum Schutz eines Computersystems vor Seitenkanalattacken bei Verwendung eines Ver- oder Entschlüsselungsverfahrens für Datenpakete eines Datenstroms zur Verfügung zu stellen, welches keine oder möglichst wenig zusätzliche CPU-Rechenzeit in Anspruch nimmt und ohne zusätzliche Hardware auskommt.

Die gestellte Aufgabe wird durch ein Verfahren mit den Merkmalen des Patentanspruchs 1 gelöst, bei welchem durch einen Zufallsgenerator Unterbrechungen im Ver- oder Entschlüsselungsverfahren generiert werden. Dabei ist vorgesehen, dass während der Unterbrechungen auf bereits ver- oder entschlüsselte Datenpakete des Datenstroms oder auf noch zu ver- oder entschlüsselnde Datenpakete des Datenstroms weitere Rechenoperationen angewendet werden, welche Teil eines Fehlerkorrekturverfahrens sind. Dies wird derart angewendet, dass ein zufälliges Rauschen in der Leistungsaufnahme des Computersystems erzeugt wird, und dass nach einer vorgegebenen Dauer einer jeweiligen Unterbrechung des Ver- und Entschlüsselungsverfahrens die weiteren Rechenoperationen, welche Teil eines Fehlerkorrekturverfahrens sind, beendet und das Ver- und Entschlüsselungsverfahren wieder begonnen wird. Es können die weiteren Rechenoperationen auch - zusätzlich oder alternativ - Teil anderer, ohnehin vorgesehener sequentieller Verfahren sein, wie Teil eines Algorithmus zur Nachrichtenauthentifizierung mittels Nachrichtenauthentifizierungscode (Message Authentication Code MAC), um die Ver- bzw. Entschlüsselungsoperation zu maskieren.

Ein Message Authentication Code (MAC) dient dazu, Gewissheit über den Ursprung von Daten oder Nachrichten zu erhalten und ihre Integrität zu überprüfen. MAC-Algorithmen erfordern zwei Eingabeparameter, erstens die zu schützenden Daten und zweitens einen geheimen Schlüssel, und berechnen aus beidem eine Prüfsumme, den Message Authentication Code. Dabei vereinbaren Sender und Empfänger einen geheimen Schlüssel. Der Sender berechnet für diesen Schlüssel und seine Nachricht einen MAC und sendet dann die Nachricht sowie den MAC an den Empfänger. Dieser berechnet den MAC zu der empfangenen Nachricht mit dem Schlüssel und vergleicht den berechneten MAC mit dem empfangenen MAC. Die Übereinstimmung beider Werte interpretiert der Empfänger als erfolgreichen Integritätstest: Die Nachricht wurde von einer Partei abgeschickt, die den geheimen Schlüssel kennt, und sie wurde während der Übertragung nicht verändert. MACs basieren entweder auf Blockchiffren oder auf Hash-Funktionen oder sind speziell entwickelte MACs. Ein gebräuchliches Verfahren zur MAC-Berechnung, der HMAC, basiert auf kryptographischen Hash-Funktionen.

Die beschriebene Erfindung kombiniert also Verschlüsselung mit anderen Operationen, in der Regel mit der Fehlerkorrektur, in der Art, dass die weiteren nötigen Rechenoperationen dazu benutzt werden, um zufälliges Rauschen der Leistungsaufnahme des Gesamtsystems zu erreichen. Dazu werden beide Operationen - die Verschlüsslung und die andere Operation - nach wie vor hintereinander nach dem Pipeline-Prinzip ausgeführt. Durch einen Zufallsgenerator wird eine Zufallszahl erzeugt, die in der Ver- oder Entschlüsselungseinheit dazu benutzt wird, zu zufälligen Zeitpunkten des Ver- oder Entschlüsselungsvorganges Unterbrechungen in Form von Leerzyklen einzubauen.

Im Fall der Verschlüsselung wird der Datenstrom am besten zuerst dem Verschlüsselungsverfahren und anschließend den weiteren Rechenoperationen, insbesondere dem Fehlerkorrekturverfahren, unterworfen. Im Fall der Entschlüsselung wird der Datenstrom zuerst den weiteren Rechenoperationen, insbesondere dem Fehlerkorrekturverfahren, und anschließend dem Entschlüsselungsverfahren unterworfen.

Als Fehlerkorrekturverfahren können sogenannten Error-Correcting Code (ECC) Verfahren verwendet werden. Ein Error-Correcting Code Verfahren ist ein Algorithmus, um eine Abfolge von Zahlen so auszudrücken, dass auftretende Fehler in der Abfolge später erkannt und - mit Einschränkungen - auf Basis der restlichen Zahlen korrigiert werden können. Bei der Error-Correcting Code Methode steht die Sicherung gegen zufällig auftretende Bit-Fehler, z.B. aufgrund von Strahlung, im Vordergrund.

Eine einfache Verfahrensvariante des erfindungsgemäßen Verfahrens ist, wenn Beginn und Ende der weiteren Rechenoperationen vom Ver- oder Entschlüsselungsverfahren gesteuert werden. Dies bedeutet, dass etwa der ECC-Generator, der den Error-Correcting Code erzeugt, von der Verschlüsselungseinheit in der Art gesteuert wird, dass er nur während der Leerzyklen der Verschlüsselungseinheit arbeitet.

Im seltenen Fall, dass die weiteren Rechenoperationen, also etwa die Fehlerkorrektur, schon abgeschlossen sind, während die Ver- oder Entschlüsselung noch Leerzyklen durchführt, wird der ECC-Generator (bzw. bei Entschlüsselung die Entschlüsselungseinheit) in dieser Zeit mit zufälligen Inputdaten betrieben. Hierbei kann erfindungsgemäß vorgesehen sein, dass, falls die weiteren Rechenoperationen beendet sind, das Ver- oder Entschlüsselungsverfahren aber noch nicht beendet ist, die durch das Ver- oder Entschlüsselungsverfahren generierten Unterbrechungen mit Rechenoperationen auf Basis von Zufallsdaten gefüllt werden.

So kann etwa ein Fehlerkorrekturverfahren mit Zufallsdaten durchgeführt werden, die von jenem Zufallsgenerator generiert werden, der auch die Unterbrechungen für das Ver- oder Entschlüsselungsverfahren generiert.

Ein Computersystem zur Durchführung des erfindungsgemäßen Verfahrens umfasst zumindest eine Ver- oder Entschlüsselungseinheit, eine bezüglich eines Datenstroms seriell dazu angeordnete weitere Recheneinheit sowie einen Zufallsgenerator, der dazu ausgebildet ist, in der Ver- oder Entschlüsselungseinheit Unterbrechungen im Ver- oder Entschlüsselungsverfahren zu erzeugen. Dabei ist die Ver- oder Entschlüsselungseinheit so mit der weiteren Recheneinheit verbunden, dass während der Unterbrechungen durch die weitere Recheneinheit weitere Rechenoperationen auf bereits ver- oder entschlüsselte Datenpakete des Datenstroms oder auf noch zu ver- oder entschlüsselnde Datenpakete des Datenstroms angewendet werden.

Der Zufallsgenerator kann mit der weiteren Recheneinheit verbunden sein, um für den Fall, dass die weiteren Rechenoperationen beendet sind, das Ver- oder Entschlüsselungsverfahren aber noch nicht beendet ist, die durch das Ver- oder Entschlüsselungsverfahren generierten Unterbrechungen mit Rechenoperationen der weiteren Recheneinheit auf Basis von Zufallsdaten des Zufallsgenerators zu füllen.

Das erfindungsgemäße Computersystem kann als anwendungsspezifische, integrierte Schaltung (ASIC) ausgeführt sein. Es kann aber auch als sogenanntes Field Programmable Gate Array (FPGA) ausgeführt sein, also als integrierter Schaltkreis (IC) der Digitaltechnik, in den eine logische Schaltung programmiert werden kann. In beiden Fällen kann das erfindungsgemäße Computersystem als Ein-Chip-System oder System-on-Chip (SoC) hergestellt werden.

Das Computersystem kann z.B. als Field Programmable Gate Array (FPGA) ausgeführt und Ver- oder Entschlüsselungseinheit sowie weitere Recheneinheit als Soft-Core oder Hard-Core ausgebildet sein.

Soft-Cores liegen als Quellcode oder in Form einer Netzliste vor und werden im frei programmierbaren Bereich eines FPGAs implementiert. Soft-Cores entsprechen somit der Soft-IP bei ASICs. Ein IP-Core, der im Quellcode vorliegt, kann sowohl für FPGAs als auch ASICs benutzt werden. Dagegen können in Form einer Netzliste vorliegende Soft-Cores nur mit einem spezifischen FPGA-Modell benutzt werden.

Hard-Cores sind als fertige Schaltung herstellerseitig unveränderbar in den Chip des FPGAs integriert. Der Vorteil dabei ist, dass Hard-Cores weniger Chipfläche belegen und meist auch schneller als mit frei programmierter Logik implementierte Soft-Cores arbeiten können. Nachteilig ist die fehlende Möglichkeit, eigene Adaptionen anzubringen oder eine Portierung (Migration) zu anderen Logikfamilien, die nicht über die meist sehr spezifischen Hard-Cores verfügen, durchzuführen.

Die Erfindung kann - etwa bei Verwendung von Soft-Cores in FPGAs oder ASICs - unter Verwendung eines Computerprogramms verwirklicht werden. Dementsprechend ist ein Computerprogrammprodukt vorgesehen, welches ein Programm umfasst, das direkt in die Recheneinheiten eines Computersystems ladbar ist, mit Programm-Mitteln, um alle jene Schritte des erfindungsgemäßen Verfahrens auszuführen, wenn das Programm von den Recheneinheiten ausgeführt wird.

Durch die erfindungsgemäße Methode kann eine Härtung gegen Differential Power Analysis (DPA) Angriffe ohne zusätzliche Hardware bzw. Rechenzeit erreicht werden. Es wird dadurch keine zusätzliche Chipfläche benötigt, wodurch der Gesamtchip kostengünstiger gefertigt werden kann. Die zusätzliche Leistungsaufnahme wird minimiert, da nur in Ausnahmefällen zusätzliche Rechenoperationen mit zufälligen Eingangsdaten durchgeführt werden.

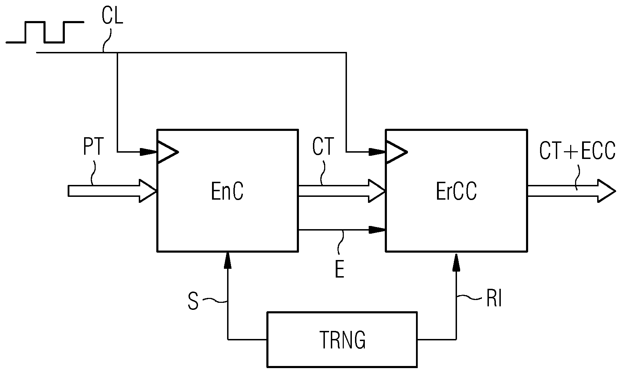

### Kurzbeschreibung der Figur

Zur weiteren Erläuterung der Erfindung wird im nachfolgenden Teil der Beschreibung auf die Figur Bezug genommen, aus der weitere vorteilhafte Ausgestaltungen, Einzelheiten und Weiterbildungen der Erfindung zu entnehmen sind. Die Figur ist beispielhaft zu verstehen und soll den Erfindungscharakter zwar darlegen, ihn aber keinesfalls einengen oder gar abschließend wiedergeben.

Die Figur zeigt ein Blockdiagramm eines Teils eines erfindungsgemäßen Computersystems. Für das Computersystem sind in der Figur nur die für die Erfindung wesentlichen Einheiten dargestellt. Es kann und wird in der Regel darüber hinaus weitere Einheiten, wie Prozessoren, Ein- /Ausgabeeinheiten, Controller, zusätzliche Schnittstellen, Speicher, etc. enthalten.

### Ausführung der Erfindung

In der Figur sind nur zwei Recheneinheiten als Teil des Computersystems dargestellt, nämlich eine Verschlüsselungseinheit EnC, die auch als Encryption Core bezeichnet wird, eine weitere Recheneinheit, die hier als Fehlerkorrektureinheit ErCC ausgebildet ist und auch als Error Correction Core bezeichnet wird, und ein Zufallszahlengenerator TRNG. In der Regel verfügt das Computersystem für die Entschlüsselung über zwei weitere entsprechende Recheneinheiten, eine weitere Fehlerkorrektureinheit ErCC und eine Entschlüsselungseinheit, wobei bei der Entschlüsselung der Daten zuerst die Fehlerkorrektureinheit ErCC und anschließend die Entschlüsselungseinheit durchlaufen wird. Diese beiden Recheneinheiten für die Entschlüsselung können wieder erfindungsgemäß ausgeführt sein, mit einem eigenen Zufallszahlengenerator TRNG. Denkbar wäre auch, dass die in der Figur dargestellten Einheiten, also die Verschlüsselungseinheit EnC, die Fehlerkorrektureinheit ErCC und der Zufallszahlengenerator TRNG, gegebenenfalls auch die Entschlüsselung vornehmen. Dabei würde der Datenfluss in die andere Richtung laufen, die Daten würden also zuerst in die Fehlerkorrektureinheit ErCC und erst anschließend in die dann als Entschlüsselungseinheit arbeitende Verschlüsselungseinheit EnC gelangen.

Verschlüsselungseinheit EnC (bzw. Entschlüsselungseinheit) und Fehlerkorrektureinheit ErCC können jeweils als Hard- oder Soft-Core ausgebildet sein, das Computersystem selbst kann als ASIC oder FPGA ausgeführt sein.

Der Zufallszahlengenerator TRNG (True Random Number Generator) ist ein physikalischer Zufallszahlengenerator und benutzt dafür physikalische Prozesse. Hierbei werden beispielsweise Impulsschwankungen elektronischer Schaltungen (z. B. thermisches Rauschen eines Widerstands) ausgenutzt. Generell können alle natürlichen Quellen verwendet werden, die auf physikalischen Effekten basieren und eine recht hohe Güte liefern, aber auch andere asynchrone Quellen, wie z. B. Atmosphärenrauschen, CCD-Sensorrauschen, die Schwankung der tatsächlichen Zeitdauer einer mit einem Zeitgeber ("Timer") gemessenen Zeitdauer oder Spannungsschwankungen an einer Zenerdiode.

Der Datenstrom gelangt nun als unverschlüsselter Datenstrom (Plain Text) PT in die Verschlüsselungseinheit EnC, wird dort verschlüsselt und verlässt die Verschlüsselungseinheit EnC als verschlüsselter Datenstrom (Ciphertext) CT. Dieser wird der Fehlerkorrektureinheit ErCC zugeführt, die dazu den fehlerkorrigierenden Code (Error Correction Code) ECC erstellt und diesen gemeinsam mit dem verschlüsselten Datenstrom CT weiterleitet, etwa per Funkübertragung, über elektrische oder optische Leitungen nach außen.

Sowohl der Verschlüsselungseinheit EnC als auch der Fehlerkorrektureinheit ErCC wird zur Synchronisation das gleiche Taktsignal (Clock) CL zugeführt, wobei ein Takt einem Bearbeitungszyklus oder einem Leerlaufzyklus entspricht. Der Zufallszahlengenerator TRNG erzeugt nun auf Basis der von ihm generierten Zufallszahlen ein Signal S, das in der Verschlüsselungseinheit EnC eine Unterbrechung des Verschlüsselungsverfahrens bewirkt. Die Verschlüsselungseinheit EnC sendet sodann ein Schaltsignal (Enable) E an die Fehlerkorrektureinheit ErCC, welche mit dem Fehlerkorrekturverfahren beginnt. Endet die vorgegebene Dauer der Unterbrechung des Verschlüsselungsverfahrens, wird das Schaltsignal E abgeschaltet, damit die Fehlerkorrektur bis auf Weiteres beendet und das Verschlüsselungsverfahren beginnt wieder. Die Verschlüsselung wird erst dann wieder unterbrochen, wenn der Zufallszahlengenerator eine neue Unterbrechung vorgibt.

Ist das Verschlüsselungsverfahren für einen vorgegebenen Abschnitt des Datenstroms abgeschlossen, so kann die Fehlerkorrektur ohne weitere Unterbrechungen für diesen Abschnitt zu Ende ausgeführt werden.

Sollte das Fehlerkorrekturverfahren für einen vorgegebenen Abschnitt des Datenstroms abgeschlossen sein, bevor die Verschlüsselung beendet ist, würde das Verschlüsselungsverfahren nicht mehr maskiert werden. So muss im Fall, dass das Fehlerkorrekturverfahren beendet ist, das Verschlüsselungsverfahren aber noch nicht, das Fehlerkorrekturverfahren auf Basis von Zufallsdaten (Random Input) RI während der Unterbrechungen des Verschlüsselungsverfahrens weiter betrieben werden. Die Zufallsdaten RI hierfür werden vom Zufallszahlengenerator TRNG erzeugt und der Fehlerkorrektureinheit ErCC zugeführt. Der dabei entstehende Error Correction Code ECC wird zwar erzeugt, um das erwünschte Rauschen zu erzeugen, aber nicht weitergesendet.

### Bezugszeichenliste:

- CL: Taktsignal (Clock)
- CT: verschlüsselter Datenstrom (Ciphertext)
- E: Schaltsignal (Enable)
- ECC: Error Correction Code
- EnC: Verschlüsselungseinheit (Encryption Core)
- ErCC: weitere Recheneinheit (Fehlerkorrektureinheit, Error Correction Core)
- PT: unverschlüsselter Datenstrom (Plain Text)
- RI: Zufallsdaten (Random Input)
- S: Signal
- TRNG: Zufallszahlengenerator

## Patentansprüche

1. Verfahren zum Schutz eines Computersystems vor Seitenkanalattacken bei Verwendung eines Ver- oder Entschlüsselungsverfahrens für Datenpakete eines Datenstroms (PT), wobei durch einen Zufallsgenerator (TRNG) Unterbrechungen im Ver- oder Entschlüsselungsverfahren generiert werden, **dadurch gekennzeichnet, dass** während der Unterbrechungen auf bereits ver- oder entschlüsselte Datenpakete des Datenstroms oder auf noch zu ver- oder entschlüsselnde Datenpakete des Datenstroms weitere Rechenoperationen, welche Teil eines Fehlerkorrekturverfahrens sind, derart angewendet werden, dass ein zufälliges Rauschen in der Leistungsaufnahme des Computersystems erzeugt wird, und dass nach einer vorgegebenen Dauer einer jeweiligen Unterbrechung des Ver- und Entschlüsselungsverfahrens die weiteren Rechenoperationen, welche Teil eines Fehlerkorrekturverfahrens sind, beendet und das Ver- und Entschlüsselungsverfahren wieder begonnen wird.

2. Verfahren nach Anspruch 1, **dadurch gekennzeichnet, dass** die weiteren Rechenoperationen Teil eines Algorithmus zur Nachrichtenauthentifizierung mittels Nachrichtenauthentifizierungscode sind.

3. Verfahren nach einem der Ansprüche 1 bis 2, **dadurch gekennzeichnet, dass** im Fall der Verschlüsselung der Datenstrom (PT) zuerst dem Verschlüsselungsverfahren und anschließend den weiteren Rechenoperationen, insbesondere dem Fehlerkorrekturverfahren, unterworfen wird.

4. Verfahren nach einem der Ansprüche 1 bis 2, **dadurch gekennzeichnet, dass** im Fall der Entschlüsselung der Datenstrom zuerst den weiteren Rechenoperationen, insbesondere dem Fehlerkorrekturverfahren, und anschließend dem Entschlüsselungsverfahren unterworfen wird.

5. Verfahren nach einem der Ansprüche 1 bis 4, **dadurch gekennzeichnet, dass** Beginn und Ende der weiteren Rechenoperationen vom Ver- oder Entschlüsselungsverfahren gesteuert werden.

6. Verfahren nach einem der Ansprüche 1 bis 5, **dadurch gekennzeichnet, dass**, falls die weiteren Rechenoperationen beendet sind, das Ver- oder Entschlüsselungsverfahren aber noch nicht beendet ist, die durch das Ver- oder Entschlüsselungsverfahren generierten Unterbrechungen mit Rechenoperationen auf Basis von Zufallsdaten (RI) gefüllt werden.

7. Verfahren nach den Ansprüchen 1 und 6, **dadurch gekennzeichnet, dass** ein Fehlerkorrekturverfahren mit Zufallsdaten (RI) durchgeführt wird, die vom Zufallsgenerator (TRNG) generiert werden.

8. Computersystem zur Durchführung des Verfahrens nach einem der Ansprüche 1 bis 7, umfassend zumindest eine Ver- oder Entschlüsselungseinheit (EnC), eine bezüglich eines Datenstroms (PT) seriell dazu angeordnete zusätzliche Recheneinheit (ErCC), insbesondere eine Fehlerkorrektureinheit, sowie einen Zufallsgenerator (TRNG), der dazu ausgebildet ist, in der Ver- oder Entschlüsselungseinheit (EnC) Unterbrechungen im Ver- oder Entschlüsselungsverfahren zu erzeugen, **dadurch gekennzeichnet, dass** die Ver- oder Entschlüsselungseinheit (EnC) mit der bezüglich des Datenstroms seriell angeordneten, zusätzlichen Recheneinheit (ErCC) derart verbunden ist, dass während der Unterbrechungen durch die bezüglich des Datenstroms seriell angeordnete, zusätzliche Recheneinheit (ErCC) weitere Rechenoperationen auf bereits ver- oder entschlüsselte Datenpakete des Datenstroms oder auf noch zu ver- oder entschlüsselnde Datenpakete des Datenstroms angewendet werden, wobei die weiteren Rechenoperation Teil eines Fehlerkorrekturverfahrens und/oder Teil eines Algorithmus zur Nachrichtenauthentifizierung mittels Nachrichtenauthentifizierungscode sind, und dass nach einer vorgegebenen Dauer einer jeweiligen Unterbrechung des Ver- und Entschlüsselungsverfahrens die weiteren Rechenoperationen beendet und das Ver- und Entschlüsselungsverfahren wieder begonnen wird.

9. Computersystem nach Anspruch 8, **dadurch gekennzeichnet, dass** der Zufallsgenerator (TRNG) mit der bezüglich des Datenstroms seriell angeordneten, zusätzlichen Recheneinheit (ErCC) verbunden ist, um für den Fall, dass die weiteren Rechenoperationen beendet sind, das Ver- oder Entschlüsselungsverfahren aber noch nicht beendet ist, die durch das Ver- oder Entschlüsselungsverfahren generierten Unterbrechungen mit Rechenoperationen der bezüglich des Datenstroms seriell angeordneten, zusätzlichen Recheneinheit (ErCC) auf Basis von Zufallsdaten (RI) des Zufallsgenerators (TRNG) zu füllen.

10. Computersystem nach Anspruch 8 oder 9, **dadurch gekennzeichnet, dass** es als Field Programmable Gate Array ausgeführt ist und Ver- oder Entschlüsselungseinheit (EnC) sowie die bezüglich des Datenstroms seriell angeordnete, zusätzliche Recheneinheit (ErCC) als Soft-Core oder Hard-Core ausgebildet sind.

11. Computerprogrammprodukt, welches ein Programm umfasst, das direkt in die Recheneinheiten eines Computersystems ladbar ist, mit Programm-Mitteln, um alle Schritte des Verfahrens nach einem der Ansprüche 1 bis 7 auszuführen, wenn das Programm von den Recheneinheiten ausgeführt wird.

## Claims

1. Method for protecting a computer system from side-channel attacks when using an encryption or decryption method for data packets of a data stream (PT), wherein interruptions in the encryption or decryption method are generated by a random generator (TRNG), **characterised in that,** during the interruptions, further computing operations which are part of an error-correction method are applied to already encrypted or decrypted data packets of the data stream or to data packets of the data stream which are yet to be encrypted or decrypted such that random noise is generated in the power consumption of the computer system, and after a specified duration of a respective interruption of the encryption and decryption method, the further computing operations which are part of an error-correction method are finished and the encryption and decryption method is started again.

2. Method according to claim 1, **characterised in that** the further computing operations are part of an algorithm for message authentication by means of a message authentication code.

3. Method according to one of claims 1 to 2, **characterised in that,** in the case of encryption, the data stream (PT) is subjected first to the encryption method and then to the further computing operations, in particular the error-correction method.

4. Method according to one of claims 1 to 2, **characterised in that,** in the case of decryption, the data stream is subjected first to the further computing operations, in particular the error-correction method, and then to the decryption method.

5. Method according to one of claims 1 to 4, **characterised in that** the start and finish of the further computing operations are controlled by the encryption or decryption method.

6. Method according to one of claims 1 to 5, **characterised in that,** if the further computing operations are finished, but the encryption or decryption method has not yet finished, the interruptions generated by the encryption or decryption method are filled with computing operations based on random data (RI).

7. Method according to claims 1 and 6, **characterised in that** an error-correction method is carried out with random data (RI) which are generated by the random generator (TRNG).

8. Computer system for carrying out the method according to one of claims 1 to 7, comprising at least one encryption or decryption unit (EnC), an additional computing unit (ErCC), in particular an error correction unit, arranged serially thereto with regard to a data stream (PT) and a random generator (TRNG) which is configured to generate interruptions in the encryption or decryption method in the encryption or decryption unit (EnC), **characterised in that** the encryption or decryption unit (EnC) is connected to the additional computing unit (ErCC) arranged serially with regard to the data stream in such a manner that, during the interruptions, the additional computing unit (ErCC) arranged serially with regard to the data stream applies further computing operations to already encrypted or decrypted data packets of the data stream or to data packets of the data stream which are yet to be encrypted or decrypted, wherein the further computing operations are part of an error-correction method and/or part of an algorithm for message authentication by means of a message authentication code, and that after a specified duration of a respective interruption of the encryption and decryption method, the further computing operations are finished and the encryption and decryption method is started again.

9. Computer system according to claim 8, **characterised in that** the random generator (TRNG) is connected to the additional computing unit (ErCC) arranged serially with regard to the data stream in order, in the event that the further computing operations are finished, but the encryption or decryption method is not yet finished, to fill the interruptions generated by the encryption or decryption method with computing operations of the additional computing unit (ErCC) arranged serially with regard to the data stream based on random data (RI) from the random generator (TRNG).

10. Computer system according to claim 8 or 9, **characterised in that** it is embodied as a field-programmable gate array and the encryption or decryption unit (EnC) and the additional computing unit (ErCC) arranged serially with regard to the data stream take the form of a soft core or hard core.

11. Computer program product which comprises a program which can be directly loaded into the computing unit of a computer system, having program means for executing all the steps of the method according to one of claims 1 to 7 when the program is executed by the computing unit.

## Revendications

1. Procédé de protection d'un système informatique contre les attaques par canal auxiliaire lors de l'utilisation d'un procédé de cryptage ou de décryptage pour des paquets de données d'un flux de données (PT), dans lequel des interruptions dans le procédé de cryptage ou de décryptage sont générées par un générateur d'aléatoires, **caractérisé en ce que** pendant les interruptions, d'autres opérations de calcul qui font partie d'un procédé de correction d'erreurs sont ainsi utilisées sur des paquets de données du flux de données déjà cryptés ou décryptés ou sur des paquets de données du flux de données encore à crypter ou à décrypter, qu'un bruit aléatoire est produit dans la puissance consommée du système informatique et qu'après une durée prédéfinie d'une interruption respective du procédé de cryptage ou de décryptage, les autres opérations de calcul, qui font partie d'un procédé de correction d'erreurs sont terminées et le procédé de cryptage ou de décryptage est repris.

2. Procédé selon la revendication 1, **caractérisé en ce que** les autres opérations de calcul font partie d'un algorithme pour l'authentification de messages au moyen d'un code d'authentification de message.

3. Procédé selon l'une des revendications 1 à 2, **caractérisé en ce que** dans le cas du cryptage, le flux de données (PT) est d'abord soumis au procédé de cryptage et ensuite aux autres opérations de calcul, en particulier au procédé de correction d'erreurs.

4. Procédé selon l'une des revendications 1 à 2, **caractérisé en ce que** dans le cas du décryptage, le flux de données est d'abord soumis aux autres opérations de calcul, en particulier au procédé de correction d'erreurs et ensuite au procédé de décryptage.

5. Procédé selon l'une des revendications 1 à 4, **caractérisé en ce que** le début et la fin des autres opérations de calcul sont commandés par le procédé de cryptage ou de décryptage.

6. Procédé selon l'une des revendications 1 à 5, **caractérisé en ce que** dans le cas où les autres opérations de calcul sont terminées, mais que le procédé de cryptage ou de décryptage n'est pas encore terminé, les interruptions générées par le procédé de cryptage ou de décryptage sont remplies par des opérations de calcul sur la base de données aléatoires (RI).

7. Procédé selon les revendications 1 et 6, **caractérisé en ce qu'**un procédé de correction d'erreurs est exécuté avec des données aléatoires (RI) qui sont générées par le générateur d'aléatoires (TRNG).

8. Système informatique pour exécuter le procédé selon l'une des revendications 1 à 7, comprenant au moins une unité de cryptage ou de décryptage (EnC) une unité de calcul supplémentaire (ErCC) disposée en série par rapport à un flux de données (PT), en particulier une unité de correction d'erreurs, ainsi qu'un générateur d'aléatoires (TRNG) qui est conçu pour produire des interruptions dans l'unité de cryptage ou de décryptage (EnC) dans le procédé de cryptage ou de décryptage, **caractérisé en ce que** l'unité de cryptage ou de décryptage (EnC) est ainsi reliée à l'unité de calcul supplémentaire (ErCC) disposée en série par rapport au flux de données que pendant les interruptions par l'unité de calcul supplémentaire (ErCC) disposée en série par rapport au flux de données, d'autres opérations de calcul sont utilisées sur des paquets de données du flux de données déjà cryptés ou décryptés ou sur des paquets de données du flux de données encore à crypter ou à décrypter, sachant que les autres opérations de calcul font partie d'un procédé de correction d'erreurs et/ou font partie d'un algorithme pour l'authentification de messages au moyen d'un code d'authentification de message, et qu'après une durée prédéfinie d'une interruption respective du procédé de cryptage ou de décryptage, les autres opérations de calcul sont terminées et le procédé de cryptage ou de décryptage est repris.

9. Système informatique selon la revendication 8, **caractérisé en ce que** le générateur d'aléatoires (TRNG) est relié à l'unité de calcul supplémentaire (ErCC) disposée en série par rapport au flux de données pour, dans le cas où les autres opérations de calcul sont terminées mais que le procédé de cryptage ou de décryptage n'est pas encore terminé, remplir les interruptions générées par le procédé de cryptage ou de décryptage par des opérations de calcul de l'unité de calcul supplémentaire (ErCC) disposée en série par rapport au flux de données, sur la base de données aléatoires (RI) du générateur d'aléatoires (TRNG).

10. Système informatique selon la revendication 8 ou 9, **caractérisé en ce qu'**il est conçu en tant que matrice prédiffusée programmable par l'utilisateur (FPGA) et que l'unité de cryptage ou de décryptage (EnC) ainsi que l'unité de calcul supplémentaire (ErCC) disposée en série par rapport au flux de données sont conçues en tant que soft-core ou hard-core.

11. Produit de programme informatique, lequel comprend un programme qui peut être chargé directement dans les unités de calcul d'un système informatique, comprenant des moyens de programme pour exécuter toutes les étapes du procédé selon l'une des revendications 1 à 7, lorsque le programme est exécuté par les unités de calcul.
